# EUROPEAN PATENT APPLICATION

(11) **EP 4 527 258 A1**
(43) Date of publication of application: **26.03.2025**
(21) Application number: 24198767.6
(22) Date of filing: 05.09.2024
(51) Int. Cl.: A47G 19/22, A45F 3/16, B65D 43/26, B65D 47/08, B65D 53/00

(54) **CAP UNIT AND CAPPED CONTAINER**

(30) Priority: 14.09.2023 JP 2023148920
(71) Applicant: Thermos L.L.C., Schaumburg, IL 60173 (US); Thermos K.K., Tsubame-shi, Niigata-ken (JP)
(72) Inventor: MURATA, Takeshi, Niigata-ken (JP); TAKATA, Ryoichi, Niigata-ken (JP)
(74) Representative: Barker Brettell LLP

(57) **Abstract**

A cap unit that enables the easy attachment and detachment of a lid packing with respect to a lid. A cap unit 1 detachably attached to a container body 2 with an upper opening, comprising: a cap body 8 that closes the upper opening 2d of the container body 2 and is provided with a nozzle part 17 communicating with the inside of the container body 2; a lid 10 that opens and closes the tip end of the nozzle part 17; and a lid packing 31 that is detachably attached to the lid 10 and seals the tip end of the nozzle part 17, wherein the lid packing 31 has a protrusion 31c that can enter the inside of the nozzle part 17 and the lid packing 31 is attached so as to be visible from the outside when the lid 10 closes the tip end of the nozzle part 17.

## Description

### Technical Field

This invention relates to a cap unit and a capped container.

### Background Art

Conventionally, capped containers have existed that are equipped with a cap unit which can be detachably attached to the container body with an upper opening.

Moreover, some cap units comprise: a cap body that closes the upper opening of the container body and is provided with a nozzle part communicating with the inside of the container body; a lid that opens and closes the tip end of the nozzle part; and a lid packing that is detachably attached to the lid and seals the tip end of the nozzle part.

Moreover, some lids have a hole part that penetrates the upper part (for example, refer to Patent Document 1 below). In contrast, the lid packing has a shaft part fitted into this hole part and is attached to the inner lower surface of the lid. The lid packing has a dome-shaped stopper part. In the cap unit, when the nozzle part is closed by the lid, the stopper part of the lid packing comes into close contact with the surrounding area of the tip side of the nozzle part. This makes it possible to seal the tip side of the nozzle part with the lid packing.

A patent document in the technological field include Japanese Unexamined Patent Application Publication No. 2011-168307 (document 1).

Incidentally, in the conventional cap unit described above, it is possible to release the fitting of the shaft part to the hole part of the lid and remove the lid packing from the inside of the lid. This allows separate cleaning of the lid and the lid packing, making it possible to maintain hygiene between the lid and the lid packing.

However, in the conventional cap unit, since the lid packing is attached by fitting from the lower surface side of the lid's inner side, it is necessary to push the lid packing out from the upper side of the hole part of the lid when removing it, making it difficult to attach and detach the lid packing to and from the lid.

The present invention has been created in view of the abovementioned problems, with the object of providing a cap unit that enables the easy attachment and detachment of a lid packing with respect to a lid, along with a capped container equipped with such a cap unit, thereby further improving usability.

In order to achieve the abovementioned purpose, the present invention provides the following means.
[1] A cap unit detachably attached to a container body with an upper opening, comprising: a cap body that closes the upper opening of the container body and is provided with a nozzle part communicating with the inside of the container body; a lid that opens and closes the tip end of the nozzle part; and a lid packing that is detachably attached to the lid and seals the tip end of the nozzle part, wherein the lid packing has a protrusion that can enter the inside of the nozzle part and is attached so as to be visible from the outside when the lid closes the tip end of the nozzle part.
[2] The cap unit according to [1], wherein the protrusion protrudes to the extent that it can be pinched with the fingers.
[3] The cap unit according to [1], wherein the lid has a hole penetrating the upper part and the lid packing has a shaft part that is fitted into the hole.
[4] The cap unit according to [1], wherein the lid packing has a stopper part that adheres to the periphery of the tip end of the nozzle part and an elastic flange part that adheres to the inner peripheral surface of the nozzle part.
[5] The cap unit according to [1], wherein the lid is rotatably attached to the cap body via a hinge part.
[6] A capped container comprising: the cap unit according to any one of [1] to [5]; and the container body to which the cap unit is attached.

As described above, according to the present invention, there is provided a cap unit that enables the easy attachment and detachment of a lid packing with respect to a lid, along with a capped container equipped with such a cap unit, thereby further improving usability.

### Brief Description of Drawings

Fig. 1 is a perspective view illustrating the appearance of a capped container with a cap unit according to one embodiment of the present invention.
Fig. 2 is a perspective view illustrating the state in which the lid of the cap unit illustrated in Fig. 1 is in the closed position.
Fig. 3 is a perspective view illustrating the state in which the lid of the cap unit illustrated in Fig. 1 is in the open position.
Fig. 4 is a cross-sectional view illustrating the state in which the lid of the cap unit illustrated in Fig. 1 is in the closed position.
Fig. 5 is a cross-sectional view illustrating the state in which the lid of the cap unit illustrated in Fig. 1 is in the open position.
Fig. 6 is a cross-sectional view illustrating the state in which the locking member is prevented from sliding against the sliding operation of the locking member in the mouth detachment mechanism of the cap unit illustrated in Fig. 1.
Fig. 7 is a perspective view illustrating the state in which the mouth forming member is detached from the opening of the cap body in the mouth detachment mechanism of the cap unit illustrated in Fig. 1.
Fig. 8 is a cross-sectional perspective view of the cap unit taken along line A-A illustrated in Fig. 7.
Fig. 9 is a perspective view of the cap unit illustrated in Fig. 1 viewed from the lower side.
Fig. 10(A) is a perspective view of the locking member viewed from the front side, while (B) is a perspective view of the locking member viewed from the rear side.
Fig. 11 is a cross-sectional perspective view illustrating the state in which the locking member is in the lock position in the mouth detachment mechanism of the cap unit illustrated in Fig. 1.
Fig. 12 is a cross-sectional perspective view illustrating the state in which the locking member is in the unlock position in the mouth detachment mechanism of the cap unit illustrated in Fig. 1.
Fig. 13 is a cross-sectional view illustrating the state in which the locking member is in the lock position in the mouth detachment mechanism of the cap unit illustrated in Fig. 1.
Fig. 14 is a cross-sectional view illustrating the state in which the locking member is in the unlock position in the mouth detachment mechanism of the cap unit illustrated in Fig. 1.
Fig. 15 is a cross-sectional view illustrating the state in which the mouth forming member is detached from the opening of the cap body in the mouth detachment mechanism of the cap unit illustrated in Fig. 1.
Fig. 16 is a cross-sectional perspective view of the lid with the lid packing attached thereto.
Fig. 17(A) is a perspective view of the lid packing viewed from the upper side, while (B) is a cross-sectional view of the lid packing.
Fig. 18(A) is a perspective view of another lid packing viewed from the upper side, (B) is a perspective view of another lid packing viewed from the lower side, and (C) is a cross-sectional view of another packing.
Fig. 19(A) is a perspective view of another lid packing viewed from the upper side, (B) is a perspective view of another lid packing viewed from the lower side, and (C) is a cross-sectional view of another packing.
Fig. 20(A) is a perspective view of another lid packing viewed from the upper side, (B) is a perspective view of another lid packing viewed from the lower side, and (C) is a cross-sectional view of another packing.

### Description of Embodiments

Hereinafter, the embodiments of the present invention will be described in detail with reference to the drawings.

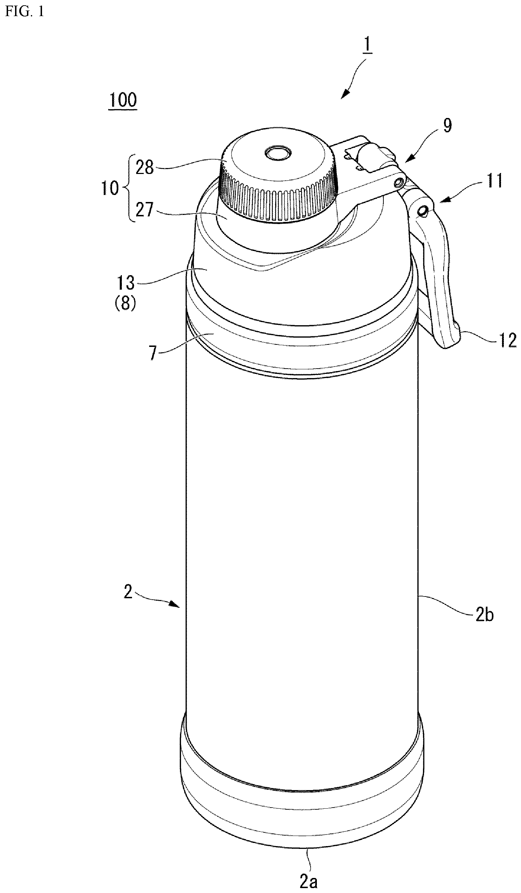

As an embodiment of the present invention, for example, a capped container 100 equipped with a cap unit 1 as illustrated in Figs. 1 to 20 will be described.

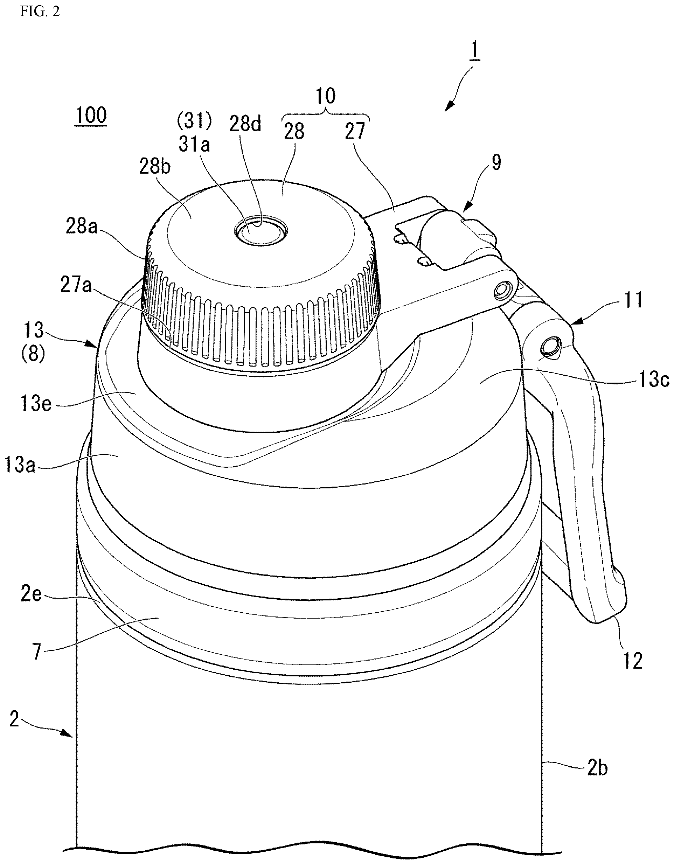

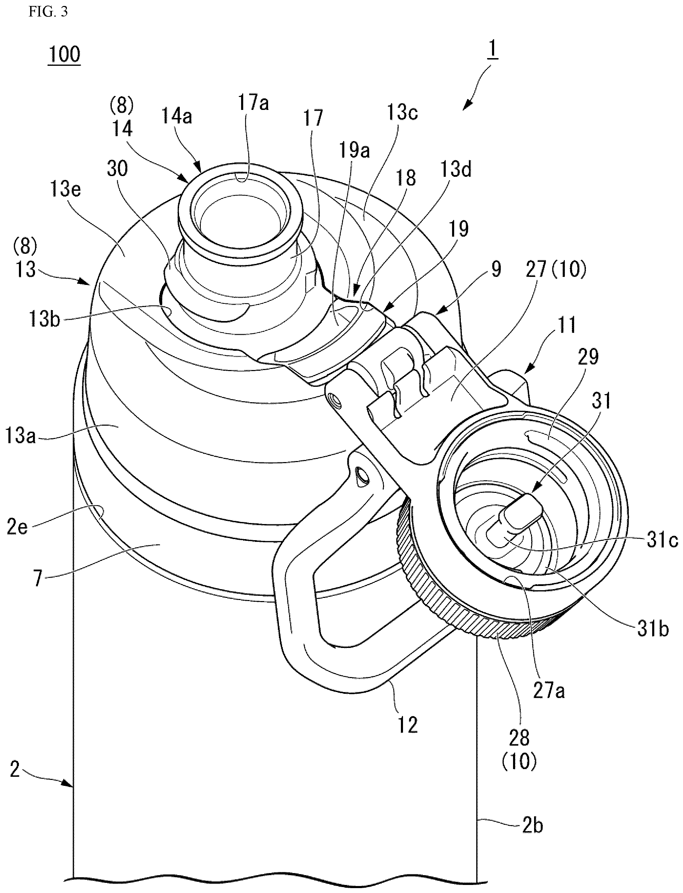

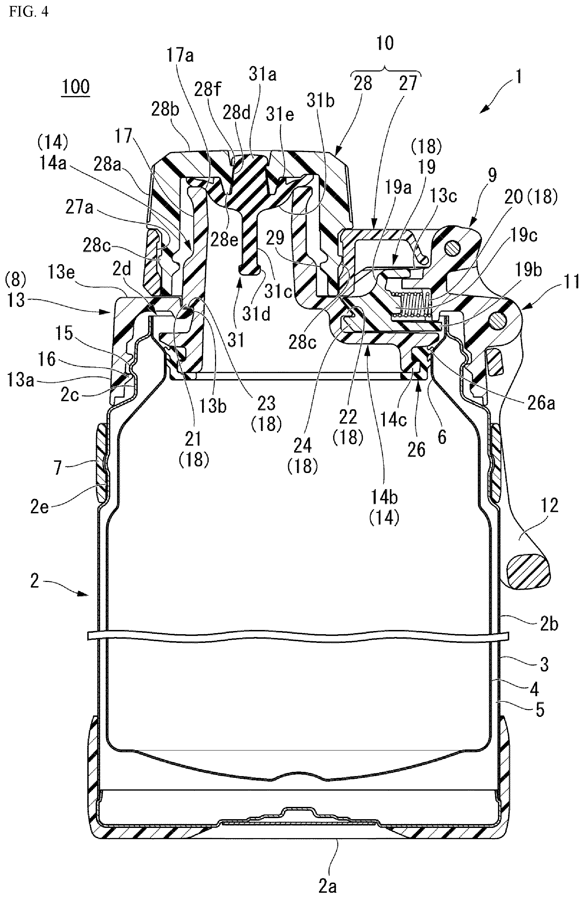

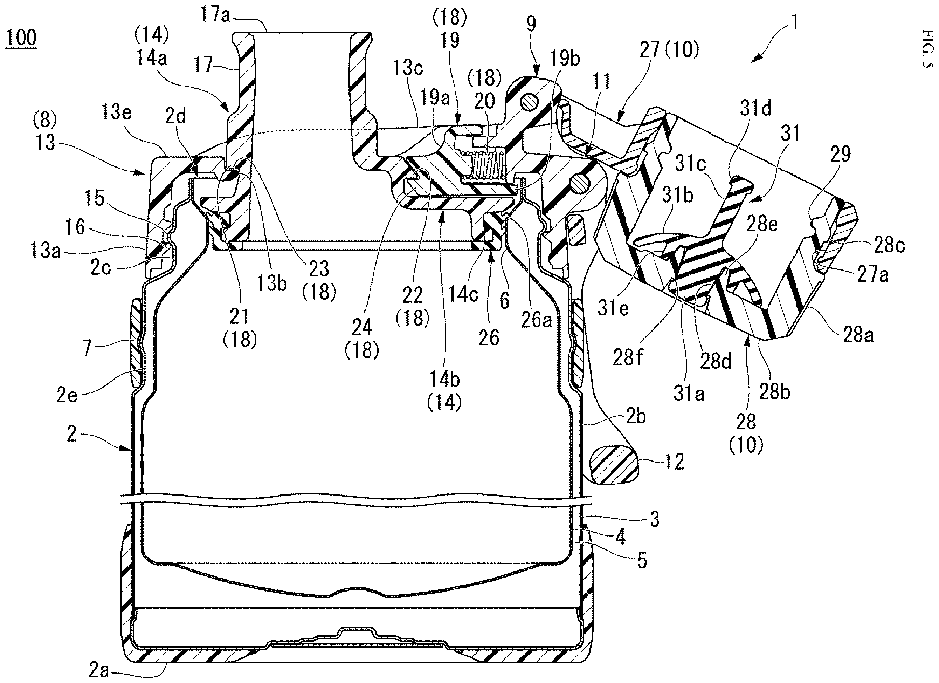

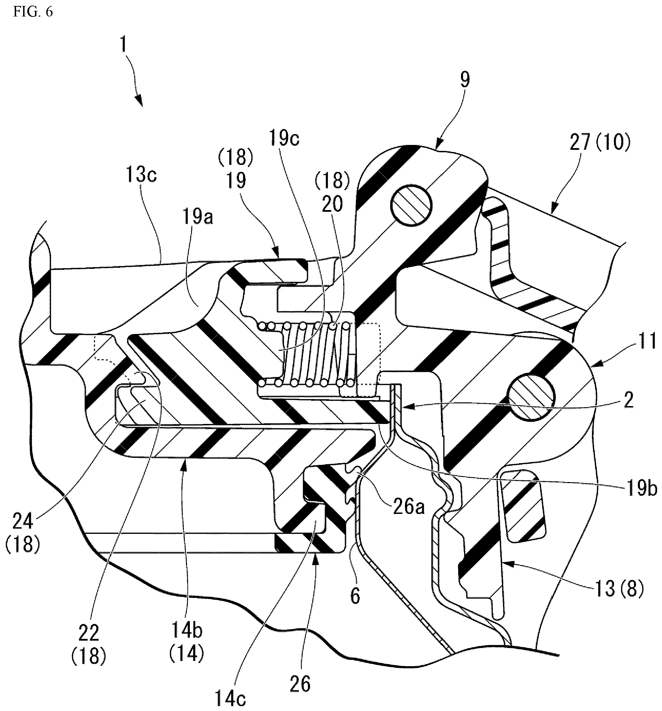

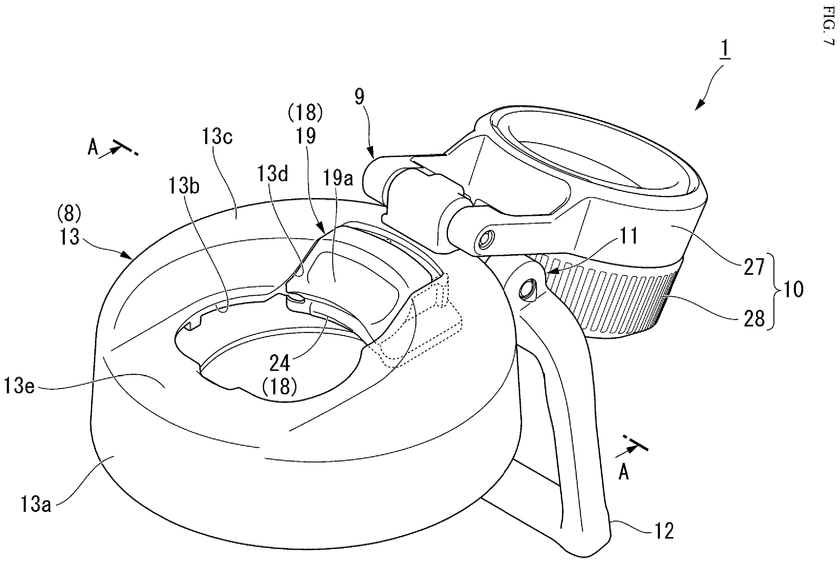

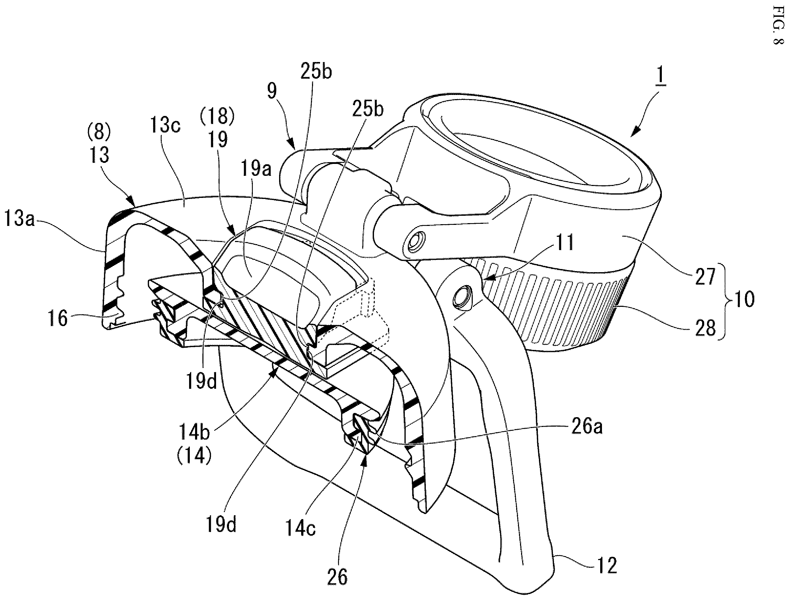

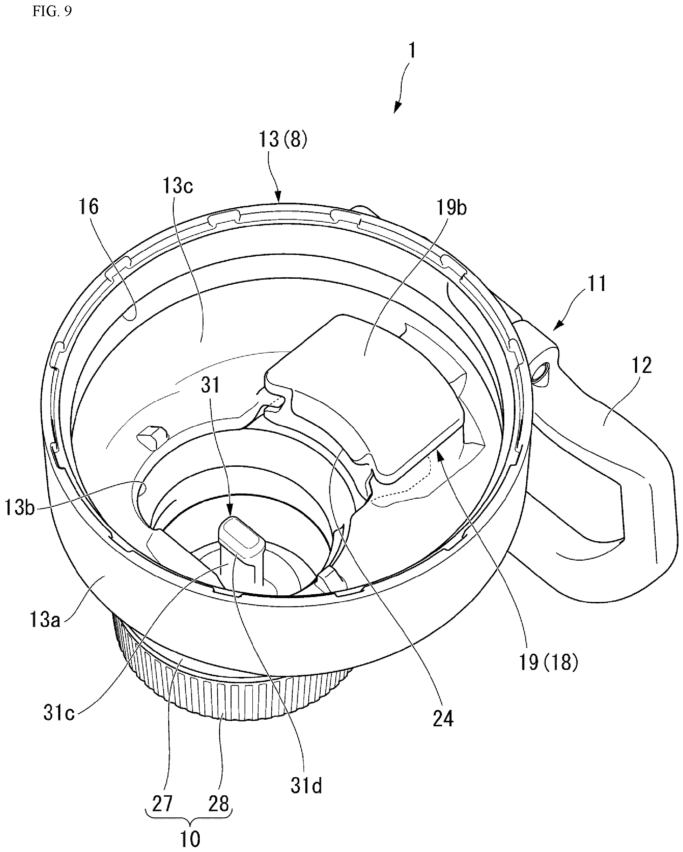

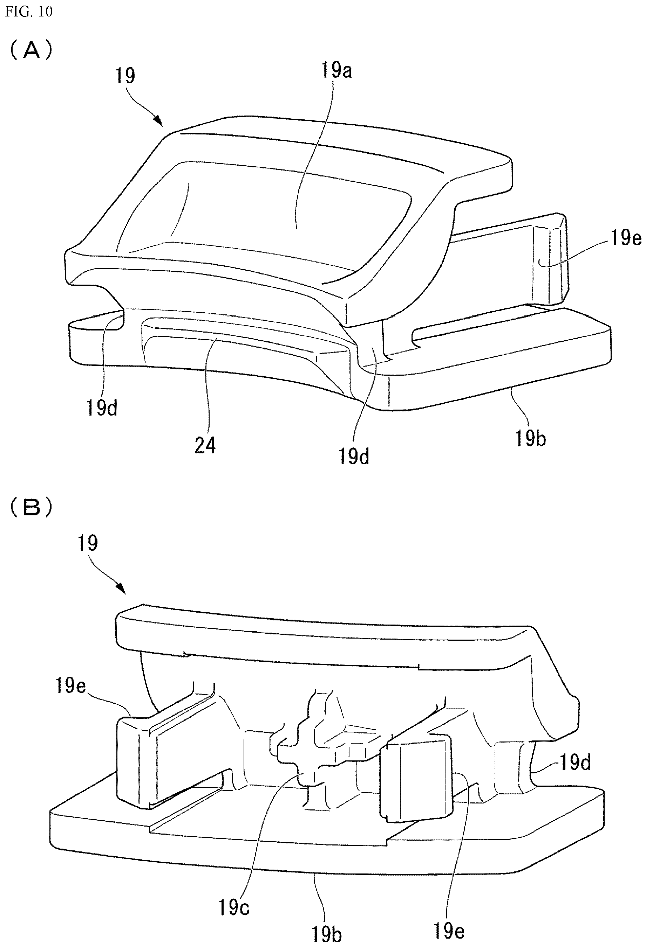

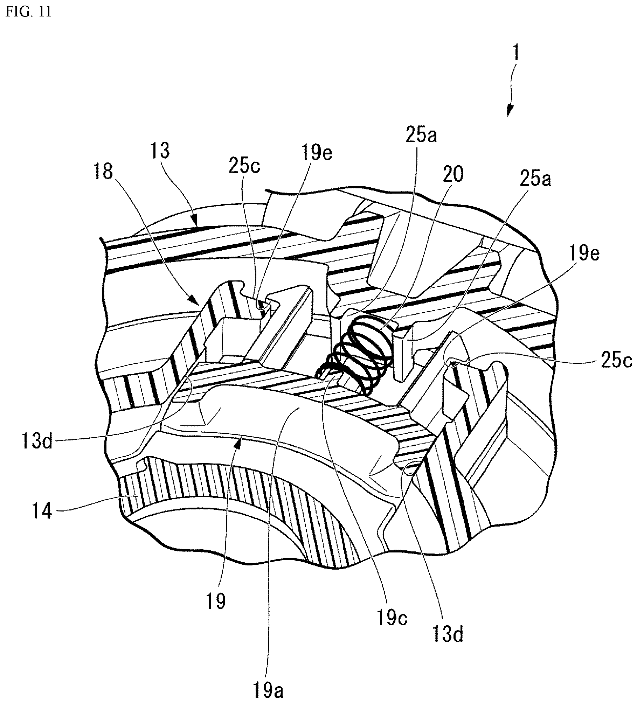

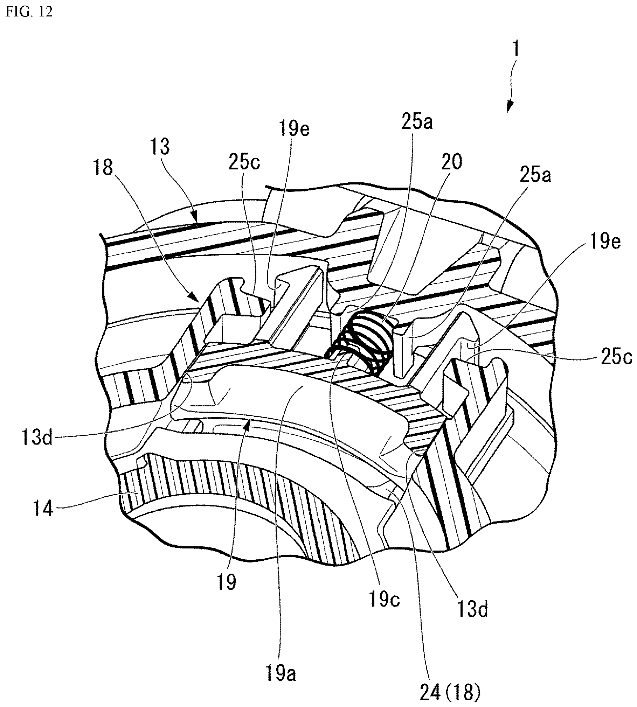

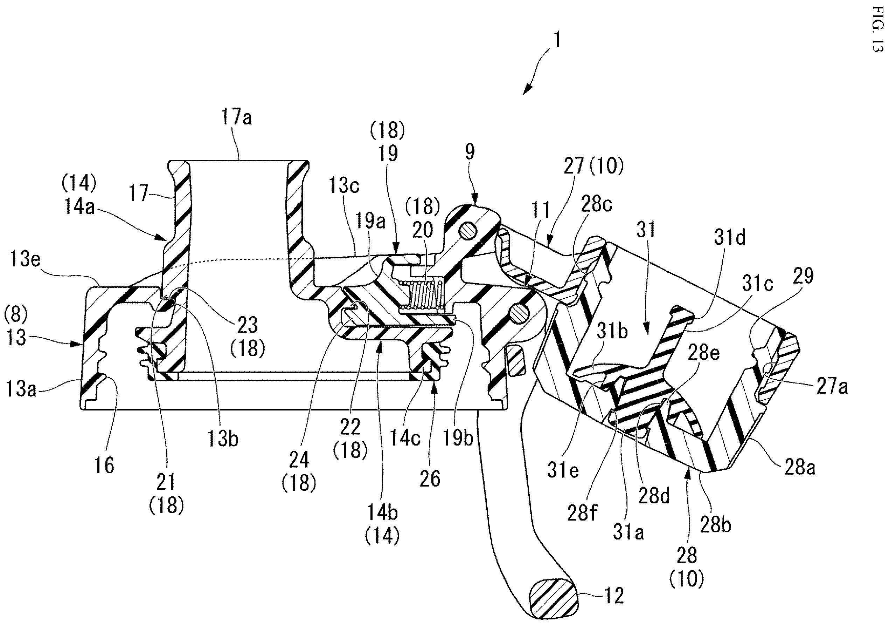

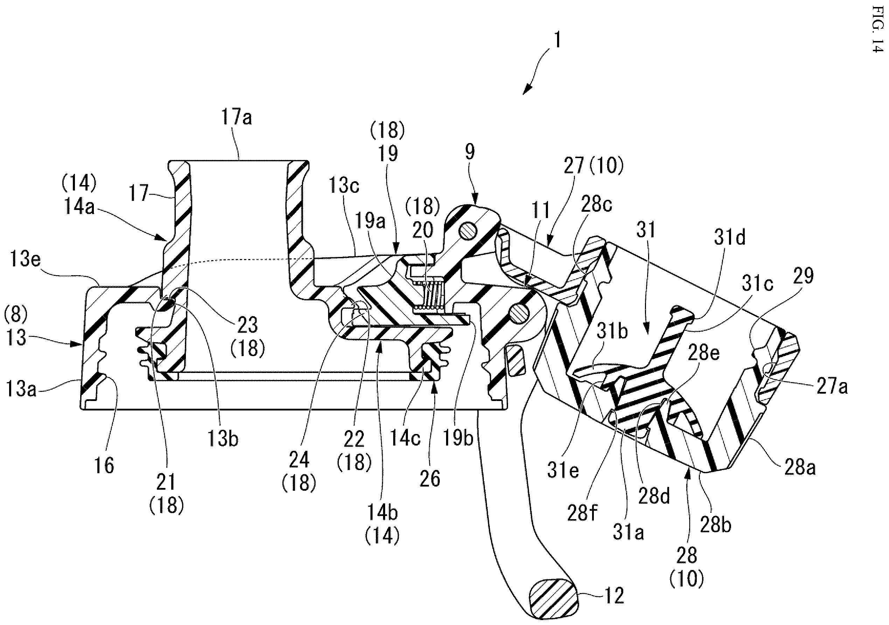

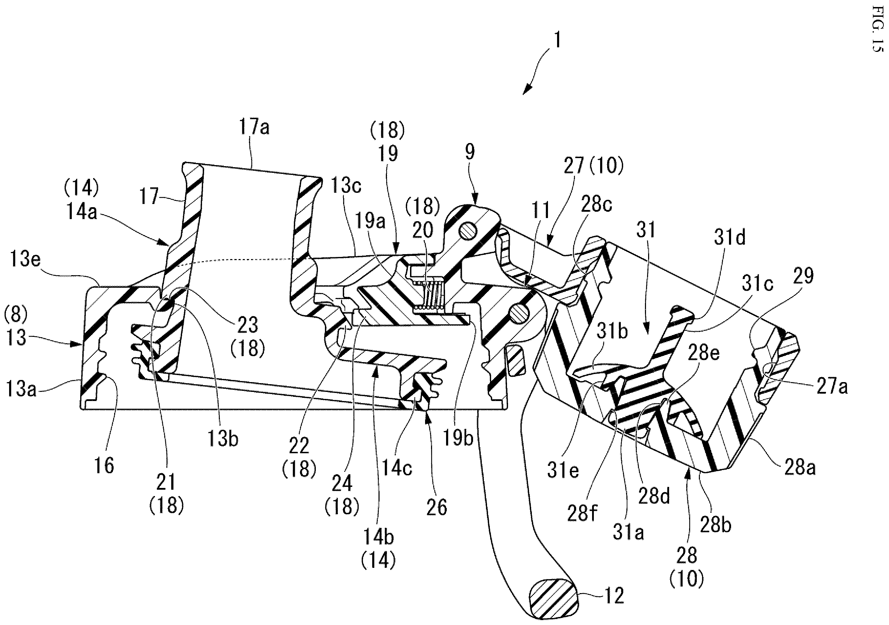

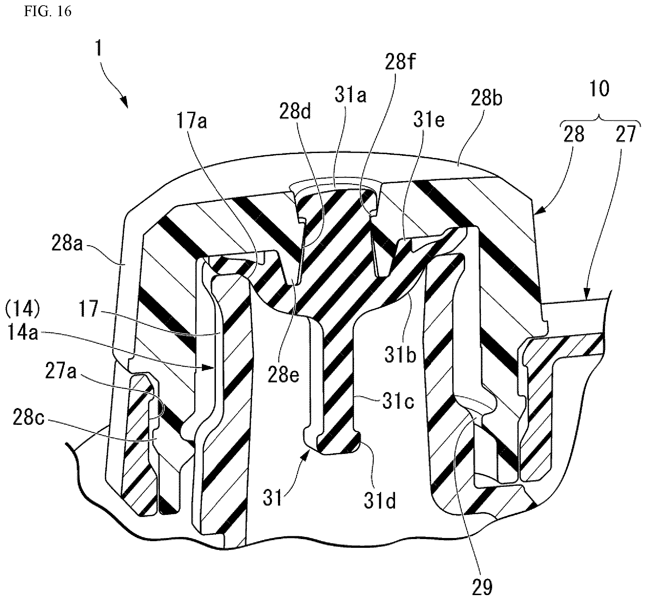

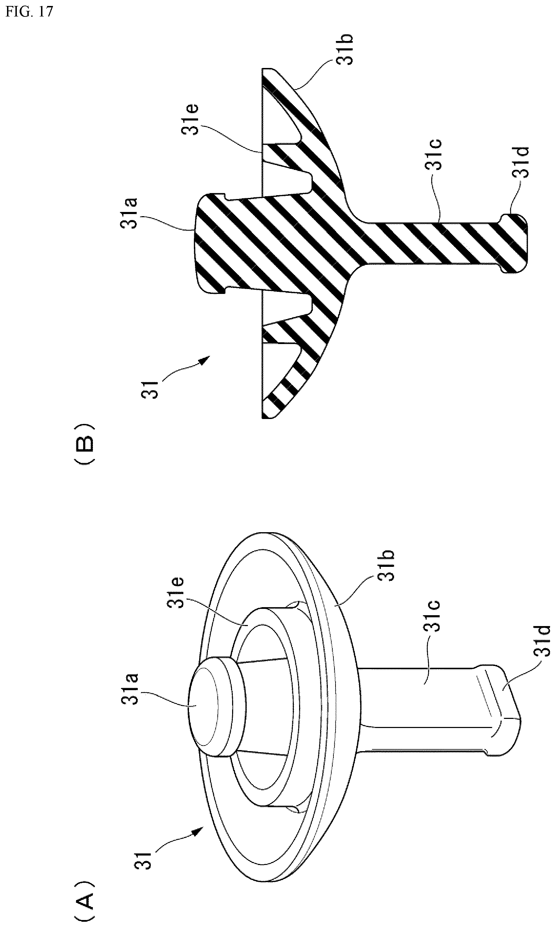

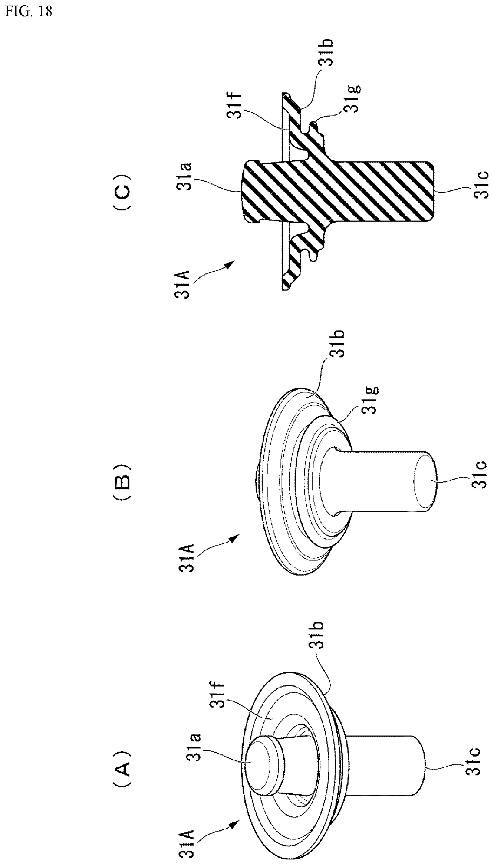

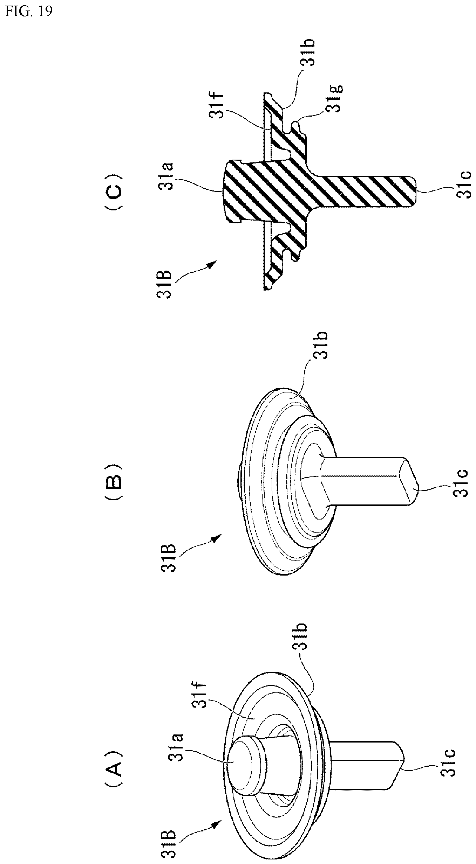

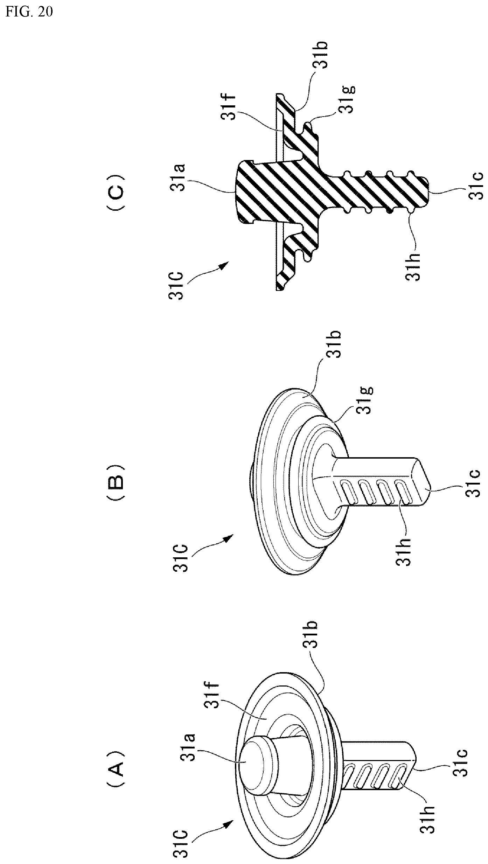

Note that Fig. 1 is a perspective view illustrating the appearance of a capped container 100 with a cap unit 1 according to one embodiment of the present invention. Fig. 2 is a perspective view illustrating the state in which the lid 10 of the cap unit 1 is in the closed position. Fig. 3 is a perspective view illustrating the state in which the lid 10 of the cap unit 1 is in the open position. Fig. 4 is a cross-sectional view illustrating the state in which the lid 10 of the cap unit 1 is in the closed position. Fig. 5 is a cross-sectional view illustrating the state in which the lid 10 of the cap unit 1 is in the open position. Fig. 6 is a cross-sectional view illustrating the state in which the locking member 19 is prevented from sliding against the sliding operation of the locking member 19 in the mouth detachment mechanism 18 of the cap unit 1. Fig. 7 is a perspective view illustrating the state in which the mouth forming member 14 is detached from the opening 13b of the cap body 8 in the mouth detachment mechanism 18 of the cap unit 1. Fig. 8 is a cross-sectional perspective view of the cap unit 1 taken along line A-A illustrated in Fig. 7. Fig. 9 is a perspective view of the cap unit 1 viewed from the lower side. Fig. 10(A) is a perspective view of the locking member 19 viewed from the front side. Fig. 10(B) is a perspective view of the locking member 19 viewed from the rear side. Fig. 11 is a cross-sectional perspective view illustrating the state in which the locking member 19 is in the lock position in the mouth detachment mechanism 18 of the cap unit 1. Fig. 12 is a cross-sectional perspective view illustrating the state in which the locking member 19 is in the unlock position in the mouth detachment mechanism 18 of the cap unit 1. Fig. 13 is a cross-sectional view illustrating the state in which the locking member 19 is in the lock position in the mouth detachment mechanism 18 of the cap unit 1. Fig. 14 is a cross-sectional view illustrating the state in which the locking member 19 is in the unlock position in the mouth detachment mechanism 18 of the cap unit 1. Fig. 15 is a cross-sectional view illustrating the state in which the mouth forming member 14 is detached from the opening 13b of the cap body 8 in the mouth detachment mechanism 18 of the cap unit 1. Fig. 16 is a cross-sectional perspective view of the lid 10 with the lid packing 31 attached thereto. Fig. 17(A) is a perspective view of the lid packing 31 viewed from the upper side. Fig. 17(B) is a cross-sectional view of the lid packing 31. Fig. 18(A) is a perspective view of another lid packing 31A viewed from the upper side. Fig. 18(B) is a perspective view of another lid packing 31A viewed from the lower side. Fig. 18(C) is a cross-sectional view of another lid packing 31A. Fig. 19(A) is a perspective view of another lid packing 31B viewed from the upper side. Fig. 19(B) is a perspective view of another lid packing 31B viewed from the lower side. Fig. 19(C) is a cross-sectional view of another lid packing 31B. Fig. 20(A) is a perspective view of another lid packing 31C viewed from the upper side. Fig. 20(B) is a perspective view of another lid packing 31C viewed from the lower side. Fig. 20(C) is a cross-sectional view of another lid packing 31C.

As illustrated in Figs. 1 to 6, the capped container 100 of the present embodiment includes the cap unit 1 of the present embodiment and a container body 2 to which the cap unit 1 is detachably attached.

The capped container 100 is a beverage container capable of keeping a beverage (liquid) housed in the container body 2 cool (or warm) by means of the container body 2, which has a vacuum insulation structure.

Specifically, the container body 2, for example, has a bottomed cylindrical outer container 3 and an inner container 4 made of stainless steel, etc., and is configured as a double-structured container in which the mouth portions of the outer container 3 and the inner container 4 are joined together with the inner container 4 housed inside the outer container 3.

Moreover, a vacuum insulation layer 5 is provided between the outer container 3 and the inner container 4. The vacuum insulation layer 5 can be formed by sealing the degassing hole provided at the bottom of the outer container 3 in a chamber depressurized (evacuated) to a high vacuum, for example.

The container body 2 has a substantially circular bottom 2a, a substantially cylindrical body 2b rising from the outer periphery of the bottom 2a, and a substantially cylindrical mouth neck 2c with a reduced diameter at the upper side of the body 2b.

The upper end of the mouth neck 2c is circularly open as the upper opening 2d of the container body 2. Furthermore, the inner peripheral surface of the mouth neck 2c (upper side of the body 2b) has a smaller diameter than the inner peripheral surface of the body 2b. Additionally, a ring-shaped extension 6 is provided all around the lower side of the inner peripheral surface of the mouth neck 2c (below the reduced diameter portion on the upper side of the body 2b).

Moreover, a shoulder member 7 is attached all around the lower side of the mouth neck 2c on the upper side of the body 2b. The shoulder member 7 is made of, for example, a cylindrical resin member and is fitted all around the stepped part 2e with a reduced diameter on the upper side of the body 2b so as to be substantially flush with the outer peripheral surface of the body 2b.

Although the capped container 100 of the present embodiment has a substantially cylindrical overall external shape, the external shape of the capped container 100 is not particularly limited, so appropriate changes can be made according to size and design, etc. The outer peripheral surface of the container body 2 may also be painted, printed, etc.

The cap unit 1 of the present embodiment includes a cap body 8 that closes the upper opening 2d of the container body 2 described above, a lid 10 rotatably attached to the cap body 8 via a first hinge part 9, and a handle member 12 rotatably attached to the cap body 8 via a second hinge part 11.

Note that in the following description, the side on which the lid 10 is attached to the cap body 8 via the first hinge part 9 is referred to as the "rear side (back side)" of the cap unit 1 (capped container 100), while the opposite side is referred to as the "front side (front side)" of the cap unit 1 (capped container 100), with the direction connecting them being described as the front-rear direction.

Furthermore, in Fig. 1, the side on which the lid 10 is positioned relative to the container body 2 is referred to as the "upper side," while the direction in which the container body 2 is positioned relative to the lid 10 is referred to as the "lower side," with the direction connecting them being described as the vertical direction. Furthermore, the direction orthogonal to the vertical direction is referred to as the radial direction, while the direction orthogonal to the front-back direction in the radial direction is referred to as the left-right direction.

As illustrated in Figs. 2 to 6, the cap body 8 has an outer cylinder member 13 and a mouth forming member 14 made of, for example, heat-resistant resin.

The outer cylinder member 13 has a substantially cylindrical peripheral wall part 13a formed so as to be continuous with the body 2b of the container body 2, along with an upper wall part 13c in which an opening 13b, a perforated hole with a smaller diameter than the peripheral wall part 13a, is formed on the upper side of the peripheral wall part 13a.

The outer cylinder member 13 (cap body 8) is detachably attached to the mouth neck 2c of the container body 2 by screwing. Consequently, a first male screw part 15 is provided on the outer peripheral surface (upper side of the body 2b) of the mouth neck 2c. At the same time, a first female screw part 16 that engages with the first male screw part 15 is provided on the inner peripheral surface of the peripheral wall part 13a of the outer cylinder member 13 (cap body 8).

As illustrated in Figs. 4 to 8, the mouth forming member 14 has an upper mouth forming part 14a forming the upper side of the opening 13b of the outer cylinder member 13, along with a lower mouth forming part 14b forming the lower side of the opening 13b of the outer cylinder member 13.

The upper mouth forming part 14a has a nozzle part 17 protruding upward in a substantially cylindrical shape. The tip of the nozzle part 17 is provided with a circular liquid outlet 17a that communicates with the inside of the container body 2 as a drinking or pouring mouth.

In other words, the cap body 8, in a state attached to the mouth neck 2c of the container body 2, closes the upper opening 2d of the container body 2 and communicates the inside and outside of the container body 2 through the nozzle part 17 (liquid outlet 17a).

The lower mouth forming part 14b is provided so as to protrude downward in a substantially cylindrical shape from the lower side of the upper mouth forming part 14a as a part to be fitted into the inside of the container body 2 from the upper opening 2d of the container body 2.

The mouth forming member 14 is detachably attached around the opening 13b of the outer cylinder member 13 via a mouth detachment mechanism 18 as illustrated in Figs. 4 to 15.

Specifically, the mouth detachment mechanism 18 has a locking member 19 slidably attached to the outer cylinder member 13 (cap body 8) in the front-rear direction, a biasing member 20 that biases the locking member 19 toward one side (front side) in the sliding direction, a first locking part 21 positioned on the opposite side (front side) of the mouth forming member 14 opposite the locking member 19, a second locking part 22 positioned on the opposite side (rear side) of the mouth forming member 14 opposite the locking member 19, a first locked part 23 positioned on the front side around the opening 13b of the outer cylinder member 13 (cap body 8), and a second locked part 24 positioned on one side (front side) in the sliding direction of the locking member 19.

As illustrated in Figs. 7 to 9 and Figs. 10 (A), (B), the locking member 19 is made of, for example, heat-resistant resin and has an operation part 19a, a cover part 19b, a spring receiving part 19c, a pair of fitting parts 19d, and a pair of retaining parts 19e.

The operation part 19a is positioned on the upper side of the locking member 19 and has a recessed shape to facilitate the sliding operation of the locking member 19 by finger. Note that the operation part 19a is not limited to this shape and can be appropriately modified.

In contrast, a cutout recess 13d for housing the locking member 19 is provided on the upper side of the cap body 8 (the upper wall part 13c of the outer cylinder member 13).

The cutout recess 13d is positioned on the side (rear side of the cap body 8) on which the first hinge part 9 is located around the opening 13b of the upper wall part 13c (cap body 8) and is formed along the sliding direction (front-rear direction of the cap body 8) of the locking member 19.

The locking member 19 is positioned inside this cutout recess 13d, while the operation part 19a is provided facing the upper side of the cap body 8.

Furthermore, a stepped part 13e recessed toward the side opposite the first hinge part 9 (front side of the cap body 8) around the opening 13b of the upper wall part 13c (cap body 8) is provided on the upper side of the cap body 8 (the upper wall part 13c of the outer cylinder member 13). Thus, the cutout recess 13d is provided to cut out part of the stepped part 13e (rear side of the cap body 8).

In the mouth detachment mechanism 18, the operation part 19a of the locking member 19 facing outward from the cutout recess 13d is provided inclining upward toward the rear side of the cap body 8 along the slope of the stepped part 13e. This makes it easier to slide the operation part 19a of the locking member 19 facing outward from the cutout recess 13d toward the other side (rear side) in the sliding direction by finger.

Furthermore, as illustrated in Fig. 7, the upper side of the locking member 19 is substantially flush with the upper side of the cap body 8, which consists of the upper wall part 13c of the outer cylinder member 13 and the stepped part 13e. Thus, even when the lid 10 is in the closed position, the lid 10 and the locking member 19 do not interfere with each other, allowing the cap unit 1 to have a space-saving simple configuration. Moreover, the operation part 19a of the locking member 19 is easy to operate, so it can provide an integrated aesthetic.

The cover part 19b is positioned on the lower side of the locking member 19, exposed on the lower side to cover the inner lower surface (lower surface of the upper wall part 13c) of the cap body 8, including the biasing member 20, and is formed in a substantially rectangular flat plate shape.

The spring receiving part 19c is configured by a protruding part projecting rearward from the central part of the rear side of the operation part 19a.

The pair of fitting parts 19d are located on both sides in the left-right direction of the locking member 19 and are formed by guide grooves recessed inward in the left-right direction extending in the front-rear direction between the operation part 19a and the cover part 19b.

The pair of retaining parts 19e are located on both sides in the left-right direction with the spring receiving part 19c therebetween, projecting rearward from the rear side of the operation part 19a, and are formed by a hook part with its tip projecting outward.

In contrast, as illustrated in Figs. 7 to 9, 11, and 12, the cap body 8 has a spring receiving part 25a, a pair of guide parts 25b, and a pair of stopper parts 25c on the inner lower surface (lower surface of the upper wall part 13c) of the outer cylinder member 13.

The spring receiving part 25a is positioned on the tip side of the part protruding forward from the central part of the rear side of the cutout recess 13d and is formed by a pair of protrusions projecting forward from both sides in the left-right direction.

The pair of guide parts 25b are located on both sides in the left-right direction of the cutout recess 13d, extending in the front-rear direction from the lower end of the cutout recess 13d, and are formed by guide protrusions projecting inward in the left-right direction.

The locking member 19 is slidably attached in the front-rear direction inside the cutout recess 13d by fitting the pair of guide parts 25b into the pair of fitting parts 19d.

The pair of stopper parts 25c are located on both sides in the left-right direction of the cutout recess 13d and are formed by claw parts projecting inward from the rear side surface of the cutout recess 13d.

The locking member 19 is retained inside the cutout recess 13d by the pair of retaining parts 19e abutting the pair of stopper parts 25c on one side (front side) in the sliding direction.

As illustrated in Figs. 11 and 12, the biasing member 20 is made of, for example, a coil spring and is disposed between one spring receiving part 25a on the side of the outer cylinder member 13 (cap body 8) and the other spring receiving part 19c on the side of the locking member 19, constantly biasing the locking member 19 toward one side (front side).

The locking member 19 is biased to one side (front side) in the sliding direction by this biasing member 20, causing the pair of retaining parts 19e to abut the pair of stopper parts 25c and be retained inside the cutout recess 13d toward the front side.

In contrast, the locking member 19 can be slid to the other side (rear side), that is, toward the side of the first hinge part 9, by pressing against the biasing force of the biasing member 20.

Note that the biasing member 20 can also be made of elastic materials such as rubber or elastomer instead of the abovementioned coil spring or other spring members.

As illustrated in Figs. 13 to 15, the first locking part 21 is positioned at the boundary between the upper mouth forming part 14a and the lower mouth forming part 14b of the mouth forming member 14 and is formed by a claw part projecting forward from the front side of the mouth forming member 14.

The second locking part 22 is positioned at the boundary between the upper mouth forming part 14a and the lower mouth forming part 14b of the mouth forming member 14 and is formed by a claw part projecting rearward from the rear side of the mouth forming member 14.

The first locked part 23 is formed by a stepped part that includes a recessed part of the front side along the opening 13b of the upper wall part 13c (stepped part 13e).

The second locked part 24 is formed by a claw part projecting forward from below the operation part 19a on the front side of the locking member 19.

In the mouth detachment mechanism 18, first, as illustrated in Fig. 15, the first locking part 21 is engaged with the first locked part 23 while fitting the upper mouth forming part 14a of the mouth forming member 14 from the lower side into the inside of the opening 13b of the outer cylinder member 13 (cap body 8).

Then, by pushing the rear side of the mouth forming member 14 upward, the second locking part 22 pushes the locking member 19 upward while resisting the biasing force of the biasing member 20 and moving upward.

Next, as illustrated in Fig. 13, the locking member 19 slides to the lock position on one side (front side) in the sliding direction by the biasing force of the biasing member 20, engaging the second locking part 22 with the second locked part 24. Thus, it becomes possible to attach the mouth forming member 14 around the opening 13b of the outer cylinder member 13 (cap body 8).

In contrast, in the mouth detachment mechanism 18, from the state illustrated in Fig. 13, as illustrated in Fig. 14, the locking member 19 is slid from the lock position on one side (front side) in the sliding direction to the unlock position on the other side (rear side) by sliding against the biasing force of the biasing member 20.

Thus, as illustrated in Fig. 15, the locked state of the mouth forming member 14 relative to the outer cylinder member 13 (cap body 8) can be released and the mouth forming member 14 can be removed downward from around the opening 13b of the outer cylinder member 13 (cap body 8).

Here, in the capped container 100 equipped with the cap unit 1 of the present embodiment, the cap body 8 is attached to the abovementioned container body 2 and the mouth detachment mechanism 18 in a state in which the cap member 28 (lid 10) has opened the liquid outlet 17a of the nozzle part 17 will be described.

As illustrated in Fig. 6, in the state in which the cap body 8 is attached to the container body 2, when the locking member 19 (mouth detachment mechanism 18) is slid to the unlock position on the other side (rear side) in the sliding direction, the rear end of the cover part 19b, which is part of the locking member 19, comes into contact with the inner surface of the mouth neck 2c of the container body 2.

At this time, the rear end of the cover part 19b comes into contact with the inner surface of the mouth neck 2c of the container body 2 before the locked state between the second locking part 22 and the second locked part 24 is released.

Thus, it is possible to prevent the locking member 19 from sliding against an erroneous sliding operation of the locking member 19, preventing the locking state of the mouth forming member 14 from being released relative to the outer cylinder member 13 (cap body 8) and preventing the mouth forming member 14 from coming off.

Additionally, it is possible to prevent the mouth forming member 14 from coming off the outer cylinder member 13 (cap body 8) due to the impact of a drop if the capped container 100 is dropped.

Further, in the cap unit 1 of the present embodiment, since there is no need to separately provide a locking mechanism to prevent the sliding of the locking member 19 as described above, it is possible to make the mouth detachment mechanism 18 a space-saving simple structure without increasing the number of parts.

Additionally, since the cover part 19b is exposed on the lower side to cover the inner lower surface (lower surface of the upper wall part 13c) of the cap body 8, the internal structure of the mouth detachment mechanism 18 including the biasing member 20 is not visible from the outside, enhancing the appearance.

Note that in the cap body 8 of the present embodiment, while the mouth forming member 14 is detachably attached to the outer cylinder member 13 by the mouth detachment mechanism 18, it is not necessarily required to have this configuration, with the outer cylinder member 13 and the mouth forming member 14 capable of being integrally formed in the cap body 8.

As illustrated in Figs. 4 and 5, the mouth forming member 14 is detachably attached with a water stop packing 26.

The water stop packing 26 is a ring-shaped sealing member for sealing between the extension 6 (container body 2) and the mouth forming member 14 (cap body 8), made of an elastic material such as heat-resistant rubber or elastomer, for example, silicone rubber.

The water stop packing 26 is fitted to the outer peripheral part of the lower flange part 14c provided on the outer peripheral part of the lower side of the lower mouth forming part 14b (mouth forming member 14).

Additionally, two elastic flange parts 26a are provided on the outer peripheral surface of the water stop packing 26, protruding in the radial direction all around.

When the cap unit 1 is attached to the container body 2 to close the upper opening 2d, the water stop packing 26 is fitted into the container body 2 with the lower mouth forming part 14b (mouth forming member 14), so the elastic flange parts 26a elastically deform and adhere closely to the extension 6 all around.

This enables sealing (water-stopping) between the extension 6 (container body 2) and the mouth forming member 14 (cap body 8) via the water stop packing 26.

In contrast, the water stop packing 26 can be removed from the lower flange part 14c (mouth forming member 14) by elastically deforming (stretching) itself.

Thus, the water stop packing 26 and the mouth forming member 14 can be washed separately, maintaining hygiene between the water stop packing 26 and the mouth forming member 14.

Note that the water stop packing 26 is not necessarily limited to the above shape, so, for example, the number of elastic flange parts 26a is not limited to the two described above, but can be one or three or more. Additionally, the water stop packing 26 is not necessarily limited to the configuration with the elastic flange parts 26a as described above, with the shape and other aspects thereof capable of being appropriately modified.

Furthermore, the water stop packing 26 can be integrally molded to the mouth forming member 14 so as to be non-removable. In this case, it is possible to prevent liquid and dirt from entering between the water stop packing 26 and the mouth forming member 14, maintaining hygiene.

As illustrated in Figs. 1 to 5, the lid 10 includes a rotating member 27 and a cap member 28 made of heat-resistant resin.

The rotating member 27 is rotatably attached at its base end via the first hinge part 9 and has a circular ring-shaped ring part 27a molded with part of its inner peripheral surface (two places in the front-rear direction in the present embodiment) formed in a concave cross-sectional shape at its tip end.

The cap member 28 has a substantially cylindrical peripheral wall part 28a, a top wall part 28b covering the upper part of the peripheral wall part 28a, and a convex ring part 28c intermittently protruding all around the outer peripheral part of the lower end of the peripheral wall part 28a. The cap member 28 is rotatably attached around its central axis by being engaged with the convex ring part 28c fitted inside the ring part 27a.

Additionally, since the convex ring part 28c has a smaller vertical width than the concave cross-sectional vertical width of the ring part 27a, the cap member 28 can slide vertically relative to the rotating member 27. Furthermore, the cap member 28 can be moved to tilt its lower end slightly in the circumferential direction relative to the ring part 27a (rotating member 27).

The cap member 28 is attached to the nozzle part 17 detachably by screwing, opening and closing the liquid outlet 17a of the nozzle part 17. Therefore, a second female screw part 29 is provided on the inner peripheral surface of the peripheral wall part 28a (cap member 28). In contrast, a second male screw part 30, which engages with the second female screw part 29, is provided on the outer peripheral surface of the nozzle part 17.

As described above, the cap member 28 can slide vertically relative to the rotating member 27, and further, can be moved to tilt the lower end of the cap member 28 slightly in the circumferential direction. Thus, when the lid 10 is in the closed position and the second female screw part 29 and the second male screw part 30 are engaged, the cap member 28 can rotate in a horizontal position, allowing smooth screwing without concern for the rotating member 27.

In the cap unit 1 of the present embodiment, as illustrated in Figs. 1 and 2, when the cap member 28 (lid 10) is in a state of closing the liquid outlet 17a of the nozzle part 17, the rotating member 27 covers the operation part 19a of the locking member 19.

Thus, when the cap member 28 (lid 10) is in a state of closing the liquid outlet 17a of the nozzle part 17, the locking member 19 cannot be operated, so the mouth forming member 14 does not come off the outer cylinder member 13. This ensures that the mouth forming member 14 does not come off unintentionally, providing peace of mind.

As illustrated in Figs. 1 to 5, 16, and 17(A), (B), a lid packing 31 is detachably attached to the lid 10.

The lid packing 31 is a stopper-shaped sealing member for sealing the tip side (liquid outlet 17a) of the nozzle part 17. The lid packing 31 is made of an elastic material, which can be the same material as the abovementioned water stop packing 26 or similar.

The lid packing 31 has a substantially cylindrical shaft part 31a, a stopper part 31b protruding all around in the radial direction from the lower end of the shaft part 31a, and a protrusion 31c protruding downward from the central part of the stopper part 31b.

In contrast, the cap member 28 (lid 10) has a hole part 28d penetrating the central part of the top wall part 28b. Furthermore, on the lower end of the hole part 28d, a circular convex part 28e protruding downward from the top wall part 28b is provided all around the hole part 28d.

The shaft part 31a has a widened end all around. Moreover, the hole part 28d has a reduced diameter portion 28f with the smallest diameter halfway up the upper side.

The lid packing 31 is attached to the inner lower surface (lower surface of the top wall part 28b) of the cap member 28 by inserting the shaft part 31a into the hole part 28d from below, fitting the widened portion of the shaft part 31a into the reduced diameter portion 28f of the hole part 28d.

Note that the shaft part 31a needs to have a certain degree of rigidity so that the shaft part 31a can be inserted into the hole part 28d. Therefore, the lid packing 31 is preferably a solid member without a cavity inside the shaft part 31a. In contrast, the lid packing 31 can also be hollow inside the shaft part 31a in order to reduce material and weight. In this case, it is necessary to select a material with appropriate hardness in order to ensure rigidity.

Additionally, since the lid packing 31 is attached to the inner lower surface of the cap member 28 via the hole part 28d, the top surface of the shaft part 31a can be visually checked from the outside on a surface substantially flush with the top wall part 28b, even when the cap member 28 (lid 10) is closing the liquid outlet 17a of the nozzle part 17. This makes it easy to confirm that the lid packing 31 has not been forgotten to be installed.

The protrusion 31c can enter the inside of the nozzle part 17 from the liquid outlet 17a and protrudes downward so as to be pinchable with the fingers. Additionally, the protrusion 31c is formed in a flat shape for easy pinching with the fingers.

Furthermore, at the tip (lower end) of the protrusion 31c, the long side of the flat shape is provided with a flange part 31d protruding in the radial direction. The flange part 31d functions as a slip stopper and finger grip when the protrusion 31c is pinched with the fingers.

Additionally, the lower end of the protrusion 31c is positioned above the lower end of the cap member 28 and below the central axis of the first hinge part 9. If the protrusion 31c is too long, it becomes difficult to introduce it into the nozzle part 17 when the lid 10 is in the closed position, while if it is too short, it becomes difficult to pinch.

In the cap unit 1 of the present embodiment, when the cap member 28 (lid 10) is in a state in which the liquid outlet 17a of the nozzle part 17 is closed, the stopper part 31b is in close contact with the periphery of the tip side of the nozzle part 17.

Here, the stopper part 31b has a hemispherical shape with a convex bottom along with an upper rib 31e projecting upward in a concentric circle on its upper side. When the lid packing 31 is attached to the inner lower surface of the cap member 28 via the hole part 28d, the circular convex part 28e is inserted into the valley between the shaft part 31a and the upper rib 31e.

Therefore, when the stopper part 31b is in close contact with the periphery of the tip side of the nozzle part 17, the stopper part 31b is pressed from above by the circular convex part 28e and the upper end of the upper rib 31e contacts the lower surface of the top wall part 28b.

This makes it difficult for the center side (protrusion 31c side) of the stopper part 31b to elastically deform upward, with only the outer periphery side of the stopper part 31b in contact with the tip side of the nozzle part 17 capable of elastically deforming and flexing.

Thus, the stopper part 31b has a reduced effective flex length and is pressed from above by the circular convex part 28e and from below by the tip side of the nozzle part 17, resulting in stronger close contact with the periphery of the tip side of the nozzle part 17.

This ensures reliable sealing of the tip side (liquid outlet 17a) of the nozzle part 17 via the lid packing 31.

Additionally, the lid packing 31 removed from the cap member 28 (lid 10) can be washed separately from the cap member 28 (lid 10), ensuring hygienic maintenance between the lid packing 31 and the cap member 28 (lid 10).

As illustrated in Figs. 1 to 3, the handle member 12 is a partially open ring-shaped member and is rotatably attached to the outer cylinder member 13 (cap body 8) via a second hinge part 11 provided on the rear side surface (peripheral wall part 13a) of the outer cylinder member 13.

Thus, in the capped container 100 equipped with the cap unit 1 of the present embodiment, it is possible to carry the container while holding the handle member 12.

In the cap unit 1 of the present embodiment having the above configuration, it is possible to easily remove the lid packing 31 from the inside of the cap member 28 (lid 10) by pulling the protrusion 31c of the lid packing 31 downward while pinching it.

Furthermore, in the cap unit 1 of the present embodiment, it is possible to easily attach the lid packing 31 to the inner lower surface (lower surface of the top wall part 28b) of the cap member 28 (lid 10) by pushing it upward from the lower side of the cap member 28 while pinching the abovementioned protrusion 31c of the lid packing 31.

As described above, in the capped container 100 equipped with the cap unit 1 of the present embodiment, since the lid packing 31 can be easily attached and detached to and from the lid 10 described above, further improved usability can be achieved.

Note that the present invention is not necessarily limited to the above embodiment, with various modifications capable of being made without departing from the spirit of the present invention.

For example, the lid packing 31 is not necessarily limited to the above-described configuration, so its configuration can be appropriately modified.

Specifically, it is possible to adopt configurations such as the lid packings 31A, 31B, 31C illustrated in Figs. 18 to 20.

Among these, the lid packing 31A illustrated in Figs. 18(A), (B), (C) has a stopper part 31b with a concentric circle stepped part 31f and a shape bent in a step-like manner on the upper side in the configuration of the lid packing 31. Further, below the stepped part 31f, an elastic flange part 31g is provided all around in the radial direction. In addition, the protrusion 31c described above is formed in a cylindrical shape.

With this configuration, when the cap member 28 (lid 10) is in a state in which the liquid outlet 17a of the nozzle part 17 is closed and the stopper part 31b of the lid packing 31A is in close contact with the periphery of the tip side of the nozzle part 17, the elastic flange part 31g is in close contact with the inner peripheral surface of the nozzle part 17 all around. Therefore, it is possible to more reliably seal the tip side (liquid outlet 17a) of the nozzle part 17 via the lid packing 31A.

In contrast, the lid packing 31B illustrated in Figs. 19(A), (B), (C) has a configuration in which the protrusion 31c described above is formed in a flat shape in the configuration of the lid packing 31. In other words, this lid packing 31B does not have a flange part 31d at the tip (lower end) of the protrusion 31c unlike the abovementioned packing 31.

In contrast, the lid packing 31C illustrated in Figs. 20(A), (B), (C) has a configuration in which multiple projections 31h are provided vertically on both sides of the protrusion 31c to prevent slipping in the configuration of the lid packing 31B.

As described above for the lid packings 31, 31A, 31B, 31C, the thickness and shape of the protrusion 31c can be considered for moldability, ease of pinching, slip resistance, etc., so the optimal shape can be selected.

Specifically, it should have a thickness that makes it easy to pinch with two fingers (thumb and index finger) on the inner peripheral side of the peripheral wall part 28a and the lower surface side of the top wall part 28b in the lid 10, and it needs to have strength to withstand repeated attachment and detachment as it would be easily damaged if too thin.

Therefore, if the material of the lid packings 31, 31A, 31B, 31C is silicone rubber, assuming the protrusion 31c has a cylindrical shape as illustrated in Fig. 18, a diameter of approximately 4 mm to 10 mm is preferable.

In the above embodiment, the cap unit 1 provided with the lid 10 detachably attached to the abovementioned nozzle part 17 is exemplified; however, the lid 10 is not limited to such a configuration and can also be a configuration provided with a lid locking mechanism that fixes a lid rotatably attached to the cap body to the cap body.

Note that the above embodiment exemplifies the case in which the present invention is applied to a beverage container with heat and cold insulation functions using the container body 2 having the above-described vacuum insulation structure; however, the present invention can be widely applied to a capped container provided with a container body and a cap unit detachably attached to the container body.

### Reference Signs List

1...cap unit, 2...container body, 8...cap body, 9...first hinge part, 10...lid, 13...outer cylinder member, 14...mouth forming member, 17...nozzle part, 17a...liquid outlet, 18...mouth detachment mechanism, 19...locking member, 20...biasing member, 21...first locking part, 22...second locking part, 23....first locked part, 24....second locked part, 26.... water stop packing, 27....rotating member, 28....cap member, 31... lid packing, 31c...protrusion, 100...capped container

## Claims

1. A cap unit detachably attached to a container body with an upper opening, comprising:
a cap body that closes the upper opening of the container body and is provided with a nozzle part communicating with the inside of the container body; a lid that opens and closes the tip end of the nozzle part; and a lid packing that is detachably attached to the lid and seals the tip end of the nozzle part, wherein the lid packing has a protrusion that can enter the inside of the nozzle part and is attached so as to be visible from the outside when the lid closes the tip end of the nozzle part.

2. The cap unit according to claim 1, wherein the protrusion protrudes to the extent that it can be pinched with the fingers.

3. The cap unit according to claim 1 or claim 2, wherein the lid has a hole penetrating the upper part and the lid packing has a shaft part that is fitted into the hole.

4. The cap unit according to any preceding claim, wherein the lid packing has a stopper part that adheres to the periphery of the tip end of the nozzle part, along with an elastic flange part that adheres to the inner peripheral surface of the nozzle part.

5. The cap unit according to any preceding claim, wherein the lid is rotatably attached to the cap body via a hinge part.

6. A capped container comprising: the cap unit according to any one of claims 1 to 5; and the container body to which the cap unit is attached.
